Europäisches Patentamt

European Patent Office

Office européen des brevets

(11) Veröffentlichungsnummer: **0 266 502**
**A1**

# (12) EUROPÄISCHE PATENTANMELDUNG

(21) Anmeldenummer: **87112130.7**

(22) Anmeldetag: **21.08.87**

(51) Int. Cl.⁴: **B22D 11/10 , H05B 6/16**

(30) Priorität: **14.10.86 DE 3634891**

(43) Veröffentlichungstag der Anmeldung:
**11.05.88 Patentblatt 88/19**

(84) Benannte Vertragsstaaten:
**AT BE CH DE ES FR GB GR IT LI LU NL SE**

(71) Anmelder: **DIDIER-WERKE AG**
**Lessingstrasse 16-18**
**D-6200 Wiesbaden(DE)**

(72) Erfinder: **Keisers, Laurenz**
**Süchtelner Strasse 208**
**D-4150 Krefeld 1(DE)**
Erfinder: **Artz, Gerd**
**Tannenstrasse 35**
**D-4030 Ratingen(DE)**
Erfinder: **Figge, Dieter**
**Defreggerstrasse 22**
**D-4300 Essen 1(DE)**
Erfinder: **Philipp, Clemens**
**Schützenstrasse 47**
**D-4005 Meerbusch 3(DE)**

(74) Vertreter: **Brückner, Raimund, Dipl.-Ing.**
**c/o Didier-Werke AG Lessingstrasse 16-18**
**D-6200 Wiesbaden(DE)**

(54) **Nachheizeinrichtung bei einer Horizontal-Stranggiessanlage.**

(57) Bei einer Horizontal-Stranggießanlage soll ein Nachheizen der Stahlschmelze in einem Verteilergefäß möglich sein. Es ist hierfür ein einstückiger Wandblock (2) aus feuerfestem, keramischen Material dem Querschnitt des Verteilergefäßes (1) angepaßt und in dieses eingesetzt. In den Wandblock 2 ist wenigstens eine Induktionsspule (5, 6) eingebaut. Unten im Wandblock (2) sind Strömungskanäle (8, 9, 10) für die Stahlschmelze vorgesehen. Diese wird beim Durchströmen der Strömungskanäle (8, 9, 10) von der Induktionsspule (5, 6) nachgeheizt.

Figur 2

## Nachheizeinrichtung bei einer Horizontal-Stranggießanlage

Die Erfindung betrifft eine Einrichtung zum Nachheizen der Stahlschmelze in einem Verteilergefäß, insbesondere Verteilerrinne, bei einer Horizontal-Stranggießanlage.

In manchen Fällen muß damit gerechnet werden, daß einem Verteilergefäß die Temperatur der Stahlschmelze nur knapp über der Liquidustemperatur liegt. Die Gießtemperatur der Stahlschmelze ist dann nur noch gleich deren Liquidustemperatur. Dies ist unerwünscht.

Aufgabe der Erfindung ist es, eine Einrichtung der eingangs genannten Art vorzuschlagen, mit der nötigenfalls ein Nachheizen der Stahlschmelze im Verteilergefäß möglich ist.

Erfindungsgemäß ist obige Aufgabe bei einer Einrichtung der eingangs genannten Art dadurch gelöst, daß ein einstückiger Wandblock aus feuerfestem, keramischen Material dem Querschnitt des Verteilergefäßes angepaßt und in dieses eingesetzt ist, daß in den Wandblock wenigstens eine Induktionsspule eingebaut ist und daß unten in dem Wandblock Strömungskanäle für die Stahlschmelze vorgesehen sind, wobei die die Strömungskanäle durchströmende Stahlschmelze von der Induktionsspule nachgeheizt wird.

Mit dieser Einrichtung kann die Temperatur der Stahlschmelze noch im Verteilergefäß angehoben werden, wenn sie aufgrund vorhergehender Vorgänge kaum mehr über der Liquidustemperatur liegt.

Ein weiterer Vorteil der Einrichtung besteht darin, daß ein vorhandenes Verteilergefäß vergleichsweise einfach mit der Nachheizeinrichtung nachrüstbar ist. Es müssen hierfür der Wandblock in das Verteilergefäß eingesetzt und die Induktionsspulen angeschlossen werden.

In bevorzugter Ausgestaltung der Erfindung liegen Abschnitte der Induktionsspule den Strömungskanälen näher als den Außenflächen des Wandblocks. Dadurch erfolgt eine intensive Aufheizung der die Strömungskanäle durchströmenden Stahlschmelze.

Vorzugsweise sind die Strömungskanäle wenigstens einseitig trichterförmig aufgeweitet. Dies begünstigt einerseits die Strömung der Stahlschmelze. Andererseits wird in den trichterförmigen, sich dem Spulenquerschnitt nähernden Wandbereichen ein vergleichsweise kleiner Abstand der Stahlschmelze zur Induktionsspule erreicht.

Vorzugsweise besteht der Wandblock aus Feuerbeton ohne Stahlfasern. Als Ausgangsmaterial eignet sich insbesondere das keramische Material mit der Typenbezeichnung "Comprital 185 W" (DIDIER).

Weitere vorteilhafte Ausgestaltungen der Erfindung ergeben sich aus den Unteransprüchen und der folgenden Beschreibung eines Ausführungsbeispiels. In der Zeichnung zeigen:

Figur 1 einen Querschnitt eines Verteilergefäßes mit eingesetztem Wandblock,

Figur 2 eine Aufsicht des Wandblocks, und

Figur 3 einen Schnitt des Wandblocks längs der Linie 111-111 nach Figur 1.

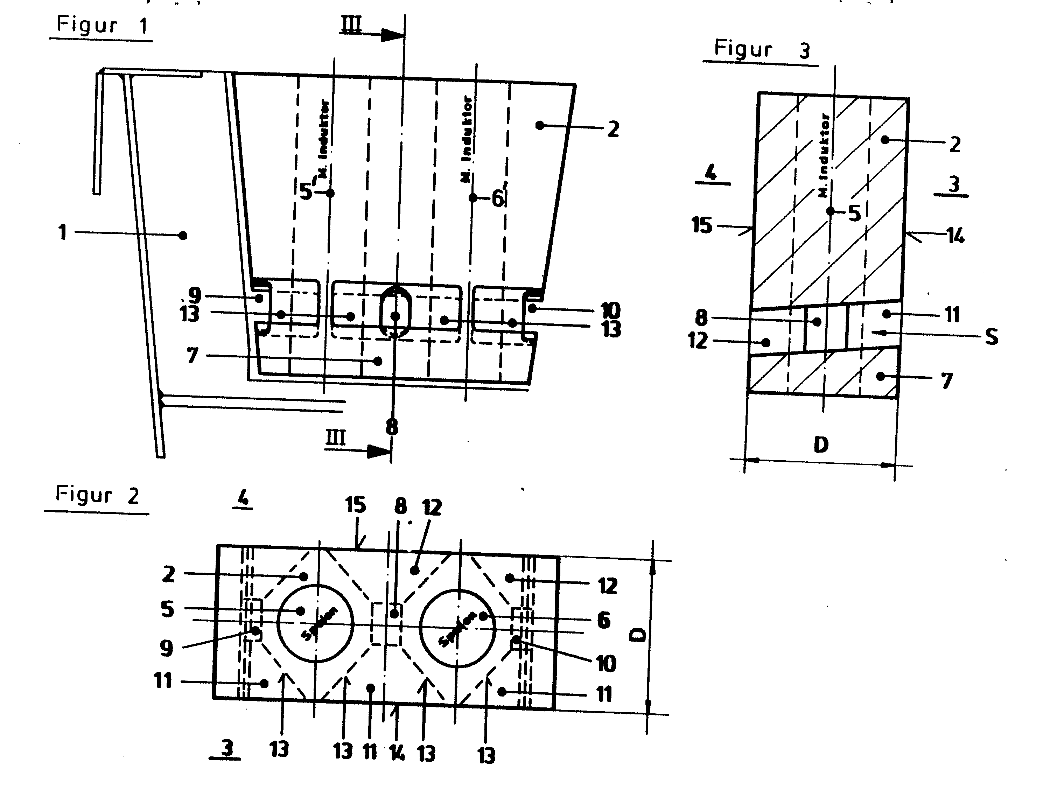

In eine Verteilerrinne 1 ist ein Wandblock 2 eingesetzt. Dieser ist dem Querschnitt der Verteilerrinne 1 angepaßt (vgl. Figur 1). Seine Dicke D (vgl. Figuren 2 und 3) ist wesentlich kleiner als die sich senkrecht zur Ebene der Figur 1 erstreckende Länge der Verteilerrinne 1. Der Wandblock 2 teilt damit die Verteilerrinne 1 in zwei Teilabschnitte 3, 4 (vgl. Figuren 2 und 3).

In den Wandblock 2 sind zwei Induktionsspulen 5, 6 eingesetzt, wobei die Spulenachsen mit 5' bzw. 6' bezeichnet sind. Die Induktionsspulen 5, 6 sind unterhalb der Verteilerrinne 1 aufgesetzt und führen senkrecht durch den Wandblock 2 nach oben.

Im Bodenbereich 7 sind am Wandblock 2 ein mittlerer Strömungskanal 8 und zwei äußere Strömungskanäle 9, 10 vorgesehen. Der mittlere Strömungskanal 8 verläuft zwischen den Induktionsspulen 5, 6. Die äußeren Strömungskanäle 9 bzw. 10 erstrecken sich zwischen der Spule 5 bzw. 6 und der Wand der Verteilerrinne 1.

Die Strömungskanäle 8, 9, 10 weisen beidseitig trichterförmige Aufweitungen 11 bzw. 12 auf. die Aufweitungen 11, 12 begrenzen Wandflächen 13, deren Abstand zu den Induktionsspulen 5 bzw. 6 kleiner ist als der Abstand der Oberflächen 14, 15 des Wandblocks 2 von den Spulen 5 bzw. 6 (vgl. Figur 2). Die Wandflächen 13 benachbarter Aufweitungen 11, 12 grenzen an den Oberflächen 14 bzw. 15 fast aneinander, so daß die Einströmung der Stahlschmelze in die Strömungskanäle 8 bis 10 im wesentlichen über die gesamte Breite des Wandblocks 2 stattfindet.

Die Strömungskanäle 8, 9, 10 verlaufen in Strömungsrichtung S schräg abfallend (vgl. Figur 3).

Um den Transport des Wandblocks 2 und dessen Einsetzen in die Verteilerrinne 1 zu erleichtert, sind an den Wandblock 2 nicht näher dargestellte, abnehmbare Transporthaken angeordnet.

## Ansprüche

1. Einrichtung zum Nachheizen der Stahlschmelze in einem Verteilergefäß, insbesondere Verteilerrinne, bei einer Horizontal-Stranggießanlage, dadurch gekennzeichnet, daß ein einstückiger Wandblock (2) aus feuerfestem, keramischen Material dem Querschnitt des Verteilergefäßes (1) angepaßt und in dieses eingesetzt ist, daß in den Wandblock (2) wenigstens eine Induktionsspule (5, 6) eingebaut ist und daß unten in dem Wandblock (2) Strömungskanäle (8, 9, 10) für die Stahlschmelze vorgesehen sind, wobei die die Strömungskanäle (8, 9, 10) durchströmende Stahlschmelze von der Induktionsspule (5, 6) nachgeheizt wird.

2. Einrichtung nach Anspruch 1, dadurch gekennzeichnet, daß Abschnitte der Induktionsspule (5, 6) den Strömungskanälen (8, 9, 10) näher liegen als den Außenflächen (14, 15) des Wandblocks (2).

3. Einrichtung nach Anspruch 1 oder 2, dadurch gekennzeichnet, daß zwei Induktionsspulen (5, 6) vorgesehen sind, zwischen denen ein Strömungskanal (8) und neben denen jeweils ein weiterer Strömungskanal (9, 10) verläuft.

4. Einrichtung nach einem der vorhergehenden Ansprüche, dadurch gekennzeichnet, daß die Strömungskanäle (8, 9, 10) wenigstens einseitig trichterförmig aufgeweitet sind.

5. Einrichtung nach einem der vorhergehenden Ansprüche, dadurch gekennzeichnet, daß die Strömungskanäle (8, 9, 10) einen Schrägverlauf in Strömungsrichtung (S) aufweisen.

6. Einrichtung nach einem der vorhergehenden Ansprüche, dadurch gekennzeichnet, daß der Wandblock (2) aus einem Feuerbeton ohne Stahlfaserbeimischung besteht.

7. Einrichtung nach einem der vorhergehenden Ansprüche, dadurch gekennzeichnet, daß am Wandblock (2) abnehmbare Transporthaken vorgesehen sind.

Figur 1

Figur 2

Figur 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | AT-A- 376 918 (VOEST-ALPINE)<br>* Figuren 1,2; Seite 2, Zeile 44 - Seite 3, Zeile 22 *<br>--- | 1,3,7 | B 22 D 11/10<br>H 05 B 6/16 |
| Y | DE-A-2 906 634 (BBC AG BROWN BOVERI)<br>* Figur 1; Seite 9, Zeilen 1-11 *<br>--- | 1,7 | |
| Y | US-A-3 251 921 (H.A. HARTLEY)<br>* Figuren 3,4; Spalte 4, Zeile 8 - Spalte 5, Zeile 58 *<br>--- | 1,3,7 | |
| A | GB-A- 656 730 (ELECTRIC FURNACE CO. LTD)<br>--- | | |
| A | EP-A-0 072 769 (ARBED S.A.)<br>--- | | |
| A | PATENT ABSTRACTS OF JAPAN, Band 6, Nr. 150 (M-148)[1028], 10. August 1982; & JP-A-57 70 066 (KAWASAKI SEITETSU K.K.) 30-04-1982<br>--- | | |
| A | PATENT ABSTRACTS OF JAPAN, Band 10, Nr. 196 (M-497)[2252], 10. Juli 1986; & JP-A-61 38 752 (FUJI ELECTRIC CO. LTD) 24-02-1986<br>----- | | **RECHERCHIERTE SACHGEBIETE (Int. Cl.4)**<br><br>B 22 D<br>F 27 D<br>H 05 B |

Der vorliegende Recherchenbericht wurde für alle Patentansprüche erstellt

| Recherchenort | Abschlußdatum der Recherche | Prüfer |
|---|---|---|
| DEN HAAG | 25-01-1988 | MAILLIARD A.M. |

**KATEGORIE DER GENANNTEN DOKUMENTE**

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
...................................................................
& : Mitglied der gleichen Patentfamilie, übereinstimmendes
   Dokument

EPO FORM 1503 03.82 (P0403)